# EUROPEAN PATENT SPECIFICATION

(11) **EP 2 853 323 B1**
(45) Date of publication and mention of the grant of the patent: **17.02.2021**
(21) Application number: 14185104.8
(22) Date of filing: 17.09.2014
(51) Int. Cl.: B22F 3/105, B22F 5/10, B22F 7/08, B22F 7/06, B22F 5/04, F01D 5/18, B33Y 80/00, B33Y 10/00

(54) **Method of manufacturing a turbine component**
Verfahren zur Herstellung einer Turbinenkomponente
Procédé de fabrication d'un composant de turbine

(30) Priority: 26.09.2013 US 201314037887
(43) Date of publication of application: 01.04.2015
(73) Proprietor: General Electric Company, Schenectady, NY 12345 (US)
(72) Inventor: Kottilingam, Srikanth Chandrudu, Greenville, SC 29615 (US); Lacy, Benjamin Paul, Greenville, SC 29650 (US); Miranda, Carlos Miguel, Greenville, SC 29615 (US); Schick, David Edward, Greenville, SC 29615 (US)
(74) Representative: BRP Renaud & Partner mbB Rechtsanwälte Patentanwälte Steuerberater

(56) References cited:
- EP-A1- 2 620 594
- EP-A1- 2 728 119
- EP-A2- 2 325 440
- DE-A1-102007 054 723
- DE-A1-102011 080 187
- US-A1- 2010 183 427
- US-B1- 8 066 483
- US-B1- 8 500 401

## Description

The present invention is directed to manufacturing processes for forming turbine components that include cooling features formed therein using a three-dimensional printing process. Turbine systems are continuously being modified to increase efficiency and decrease cost. One method for increasing the efficiency of a turbine system includes increasing the operating temperature of the turbine system. To increase the temperature, the turbine system must be constructed of materials able to withstand elevated temperatures during continued use.

In addition to modifying component materials and coatings, one common method of increasing temperature capability of a turbine component includes the use of cooling channels. The cooling channels are often incorporated into metals and alloys used in high temperature regions of gas turbines. Manufacturing cooling channels in components can be difficult and time-consuming. One technique includes casting the channels in the components using complex molds. The complex molds are often difficult to position relative to the component surface near the hot gas path where cooling is required. Another technique includes machining the channels into components after casting, which then requires closing the open channels off at the surface of the component by welding or brazing insert and impingement plates to the surface. The final component is then coated using thermal spraying. Closing the cooling channels can often inadvertently fill the cooling channels blocking the flow of cooling fluids, such as air from a compressor section of a gas turbine. EP2325440 discloses a gas turbine engine component comprising a serpentine cored airfoil with a microcircuit providing cooling at the surface.

Selective laser melting (or three-dimensional printing) is a relatively inexpensive process capable of manufacturing difficult to fabricate components. However, components printed by selective laser melting do not have the same temperature capability as cast high temperature superalloy materials. Thus, use in high temperature environments has been perceived as ill-advised. US8500401 nevertheless discloses a gas turbine engine, and more specifically an air cooled turbine blade with near wall cooling. The near wall cooling channels are formed from a metal printing process and not from an investment casting process that uses a ceramic core in order to form the outer airfoil wall thin in a range of 0.254 mm (0.010 inches) to 0.508 mm (0.020 inches), which is too thin for casting.

A method of forming a component that does not suffer from one or more of the above drawbacks would be desirable in the art.

According to the present invention, a method of forming a component is provided according to claim 1.

According to a further disclosure, not part of the present invention, a method of thermal management of a component is provided. The method includes forming at least one portion of the component, printing a cooling member of the component, attaching the at least one portion to the cooling member of the component, and transporting a fluid through at least one fluid pathway defined by the at least one cooling channel within the component to cool the component. The cooling member includes at least one cooling feature. The at least one cooling feature includes at least one cooling channel adjacent to a surface of the component. Printing allows for near-net shape geometry of the cooling member with the at least one cooling channel being located within a range of about 127 micrometers (0.005 inches) to about 762 micrometers (0.030 inches) from the surface of the component. The cooling channel defines a fluid pathway through which the fluid is transported.

Various features and advantages of the present invention will be apparent from the following more detailed description of the preferred embodiment, taken in conjunction with the accompanying drawings which illustrate, by way of example, the principles of the invention. In the drawings:
FIG. 1 is a perspective view of a component including a plurality of cooling channels formed therein, according to an embodiment of the disclosure.
FIG. 2 is a exploded perspective view of a cooling member of a component including cooling features.
FIG. 3 is a perspective view of a cooling member of a component including cooling features formed therein, according to an embodiment of the disclosure.
FIG. 4 is a cross-sectional view along line 4-4 of FIG. 3 of the component, illustrating a cooling channel formed in the component, according to an embodiment of the disclosure.

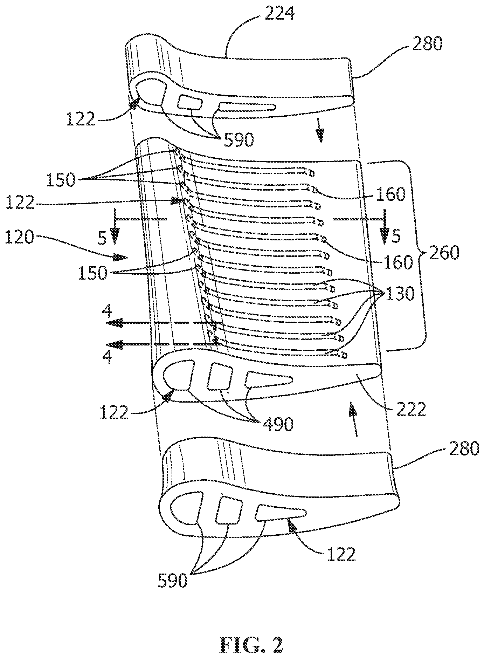

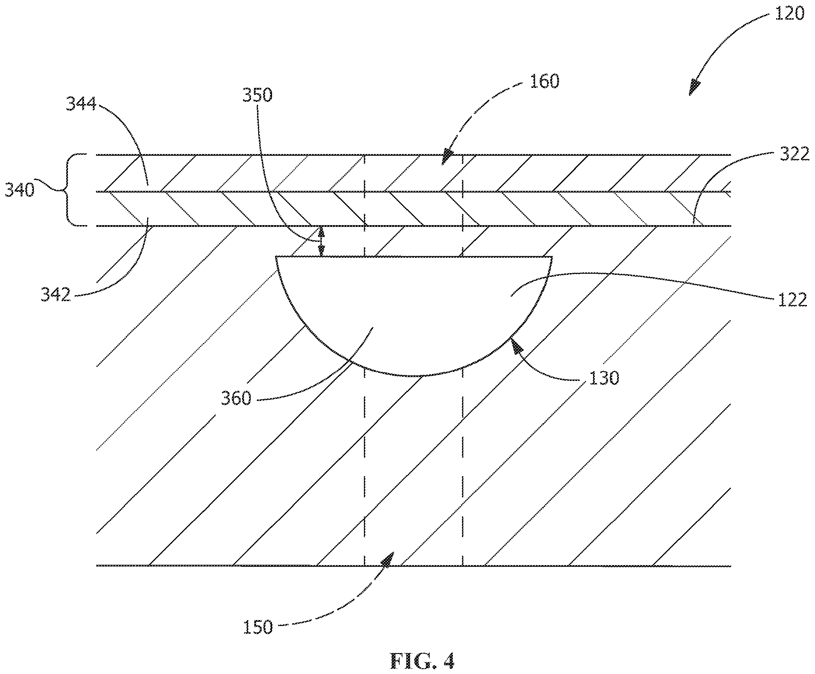

FIG. 4 is a cross-sectional view along line 4-4 of FIG. 2 of the component, illustrating at least one cooling channel including supply and exit passages, according to an embodiment of the disclosure.

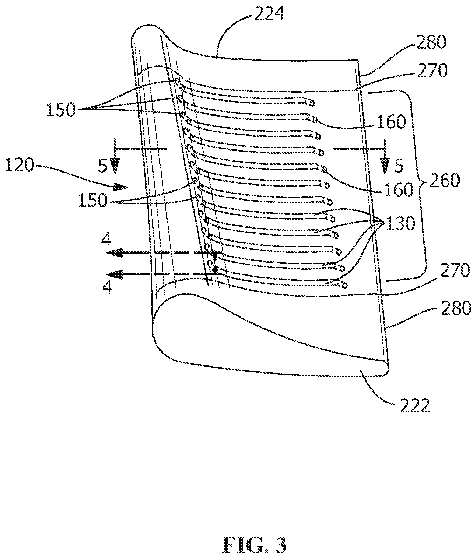

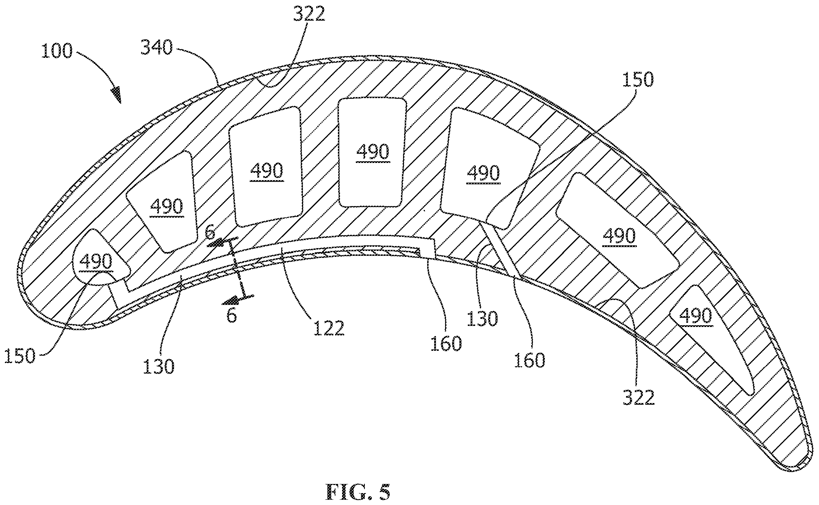

FIG. 5 is a cross-sectional view along line 5-5 of FIG. 3 of the component, illustrating cooling features formed in the component, according to an embodiment of the disclosure.

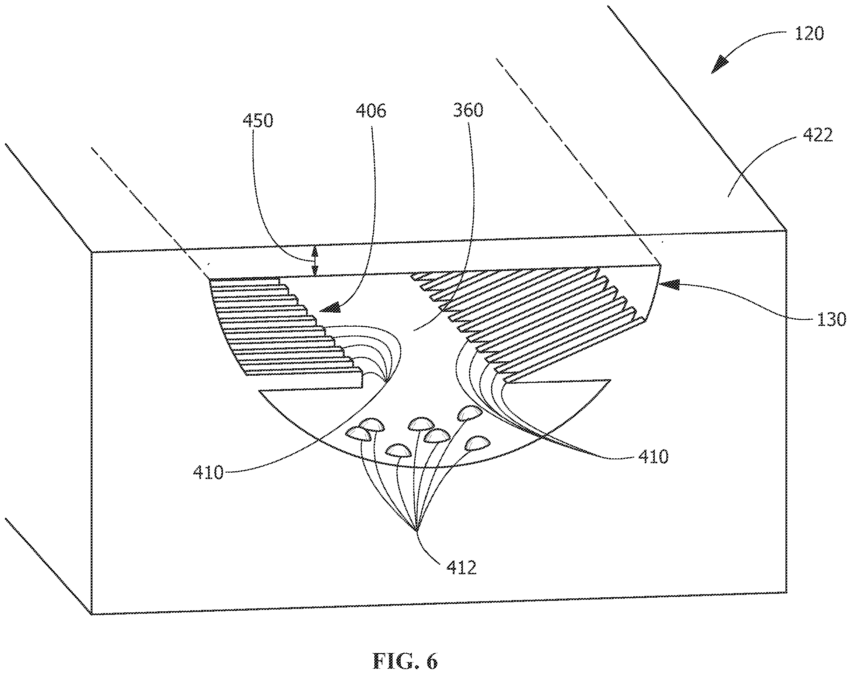

FIG. 6 is a cross-sectional view along line 6-6 of FIG. 5 of a cooling channel formed in the component illustrating features that disrupt laminar flow of a fluid, according to an embodiment of the disclosure.

Wherever possible, the same reference numbers will be used throughout the drawings to represent the same parts.

Provided is a manufacturing process. Embodiments of the present disclosure, in comparison to processes and articles that do not include one or more of the features disclosed herein, provide additional cooling and heating, permit cooling in new regions, permit cooling with new materials, permit cooler and/or hotter streams to be directed from flow within turbine components, permit the useful life of turbine components to be extended, permit turbine systems using embodiments of the turbine components to be more efficient, permit turbine components to be manufactured more easily, permit manufacturing of cooling features that previously could not be made, permit manufacturing of components that otherwise cannot be made using traditional manufacturing processes, permit hybrid material construction of turbine components or a combination thereof.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The term "printing" refers to a three-dimensional printing process. Examples of three-dimensional printing processes include, but are not limited to, the processes known to those of ordinary skill in the art, such as Direct Metal Laser Melting ("DMLM"), Direct Metal Laser Sintering ("DMLS"), Selective Laser Sintering ("SLS"), Selective Laser Melting ("SLM"), and Electron Beam Melting ("EBM"). As used herein, the term "three-dimensional printing process" refers to the processes described above as well as other suitable current processes that include the build-up of materials layer by layer.

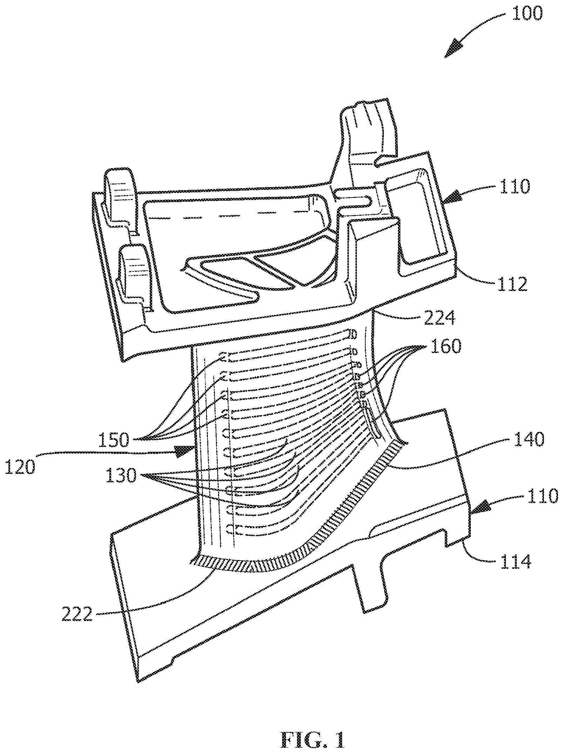

Referring to FIG. 1, in one embodiment, the component 100 may be a static component, rotating component or combustion hardware in a turbine system. Examples of static components include, but are not limited to, nozzles, vanes, shrouds, near flow path seals, transition pieces, and combinations thereof. Component 100 includes at least one portion 110 and a cooling member 120. Cooling member 120 is attached to at least one portion 110 by any suitable joining technique, such as, but not limited to, brazing, welding or mechanical means. For example, in FIG. 1, component 100, a nozzle, includes cooling member 120, an airfoil, attached to a first end portion 114 and a second end portion 112.

To manufacture component 100, at least one portion 110 is formed. Suitable methods for forming at least one portion 110 include casting or printing. In one embodiment, at least one portion 110 is formed using traditional manufacturing methods, such as, but not limited to casting. At least one portion 110 may be cast using molds to form the desired shape using desired materials to provide desired strength and thermal characteristics.

Printing cooling member 120 or at least one portion 110 includes using three-dimensional printing to form at least one cooling feature 122 (see FIGS. 2 and 5). The at least one cooling feature 122 includes cooling channels 130 and cooling cavities 490 and 590. The at least one cooling channel 130 is adjacent to the surface 322 of component 100. In an alternative embodiment, as shown in FIG. 2, a segment of cooling member 120 or portion 110 is printed with at least one cooling channel 130, then the printed segment of cooling member 120 or portion 110 including at least one cooling channel 130 is attached to other segments of cooling member 120 or portion 110, without cooling channels. The other segment of cooling member 120 or portion 110 may be formed using methods such as, but not limited to, casting, forging, or printing. The three-dimensional printing includes distributing an atomized powder onto a substrate plate (not shown) using a coating mechanism (not shown). The substrate plate is positioned within a chamber (not shown) having a controlled atmosphere, for example, an inert gas, such as argon, nitrogen, other suitable inert gases, or a combination thereof. The atomized powder is melted, for example, by electron beam melting, laser melting, or other melting from other energy sources, to form a portion or layer of a three-dimensional product, such as, a segment of cooling member 120 or at least one portion 110 of a component 100. The process is repeated to form the three-dimensional product, such as cooling member 120 or portion 110.

Three-dimensional printing may use atomized powders that are thermoplastic, metal, metallic, ceramic, other suitable materials, or a combination thereof. Suitable materials for the atomized powder include, but are not limited to, stainless steel, tool steel, cobalt chrome, titanium, aluminum, alloys thereof, nickel based superalloys, or combinations thereof. In one embodiment, the material for the atomized powder corresponds with material for an alloy suitable for the hot-gas path of a turbine system. The material for cooling member 120 may be the same or different than material chosen for portion 110. At least one portion 110 may be selected from a first material and cooling member 120 may be selected from a second material. In one embodiment, the first material may be different than the second material. Alternatively, the first material may be the same as the second material. Suitable examples of first material for at least one portion 110, include, but are not limited to, nickel, iron, cobalt, chromium, molybdenum, aluminum, titanium, gold, silver, stainless steel, alloys thereof, nickel based superalloys, cobalt superalloys, or combinations thereof. Suitable examples of second material for cooling member 120, include, but are not limited to, nickel, iron, cobalt, chromium, molybdenum, aluminum, titanium, gold, silver, stainless steel, alloys thereof, nickel based superalloys, cobalt superalloys, or combinations thereof. Suitable examples of commercially available materials, include, but are not limited to, Co-Cr (70Co, 27Cr, 3Mo), Stainless Steel 316, INCONEL® alloy 625 and INCONEL® alloy 718, INCONEL® alloy 738 (INCONEL® being available from Special Metals Corporation, Princeton, KY), GTD-222® (a trademark of General Electric Company), Haynes® 282® alloy (available from Haynes International, Kokomo, Indiana), UDIMET® alloy 500 (being available from Special Metals Corporation, Princeton, KY). In one embodiment, material for cooling member 120 may be chosen so as to have a higher thermal conductivity than the material from which at least one portion 110 is formed thereby enabling increased efficiency and requiring less fluid to be used to alter the temperature of surface 322 of component 100.

One example of a three-dimensional printing process is selective laser melting which uses a predetermined design file or two-dimensional slices of a three-dimensional file, for example, from a computer-aided design program. The thickness of the two-dimensional slices determines the resolution of the selective laser melting. For example, when the two-dimensional slices are 20 micrometers thick, the resolution will be greater than when the two-dimensional slices are 100 micrometers thick for the printing of a predetermined component, such as, the cooling member 120. In one embodiment, cooling member 120 or at least one portion 110 formed from the printing is near-net-shape and includes a plurality of cooling features 122 such as at least one cooling cavity 490, 590 and a plurality of cooling channels 130 formed therein. As shown in FIG. 2, cooling member 120 may be an airfoil, having near-net-shape and a plurality of cooling features 122 such as cooling cavities 490, 590 and cooling channels 130 formed therein. In one embodiment, cooling member 120 may be printed as a single piece (see FIG. 1). In an alternative embodiment, as shown in FIGS. 2 and 3, cooling member 120 may be formed as a first segment 260 including a plurality of cooling channels 130 and at least one cooling cavity 490 and at least one second segment 280 optionally including a plurality of cooling cavities 590. As shown in FIGS. 2 and 3, the at least one cooling cavity 490 of the first segment 260 may be aligned with the at least one cooling cavity 590 of the second cavity. The first segment 260 may be joined to the at least one second segment 280 using any suitable joining technique, shown by dashed lines 270 (see FIG. 3). Printed cooling member 120 includes a first end 222 and a second end 224. First end 222 or second end 224 may be attached to portion 110 using any suitable joining process, such as, but not limited to, brazing, welding or mechanical attachment means. As shown in FIG. 1, first end 222 of cooling member 120 is attached to first end portion 114 and second end 224 of cooling member 120 is attached to second end portion 112 by welding or brazing, illustrated by a joint 140. Suitable examples of attaching include, but are not limited to, arc welding, beam welding, brazing, transient liquid phase (TLP) bonding, and diffusion bonding.

In one embodiment, as shown in FIG. 1, cooling member 120 is a single printed piece including cooling channels 130, cooling cavities 490 and first openings 150 or supply passages and second openings 160 or exit passages formed therein. In an alternative embodiment, as shown in FIGS. 2 and 3, cooling member 120 is formed in steps. In one step, a first segment 260 including a plurality of cooling features 122 including cooling channels 130 and/or cooling cavities 490 and/or first and second openings 150 and 160 are printed. In another step, at least one second segment 280 is formed using three-dimensional printing or traditional casting techniques. As discussed above, first segment 260 may be formed using a first material and at least one second segment 280 may be formed using a second material. In one embodiment, first and second materials are the same. In an alternative embodiment, first and second materials are different. After first segment 260 and at least one second segment 280 are formed, cooling member 120 is built by joining first segment 260 and at least one second segment 280 along joint lines 270 (see FIG. 3). Any suitable joining method may be used to join first segment 260 and at least one second segment 280, such as, but not limited to, arc welding, beam welding, brazing, transient liquid phase (TLP) bonding, and diffusion bonding.

As shown in FIG. 4, first openings 150 of supply passages from cooling cavity 490 to cooling channel 130 and second openings 160 or exit passages for coolant to leave channel 130 may also be printed into cooling member 120 or first segment 260 of cooling member 120. First openings 150 or inlets may be attached to cooling channel cavities 490 running throughout the length of component 100. First openings 150 and second openings 160 are interconnected by cooling channels 130. In one embodiment, second openings 160 may be cylindrical holes but could also be shaped holes to enable coolant exiting the cooling channel 130 to provide film coverage to the downstream portion of the component. Second openings 160 or exit passages may also be trenches where coolant from one or more cooling channels 130 enters to spread along the trench and then exit the trench as film (see FIG. 1).

Referring to FIG. 5, using three-dimensional printing allows the at least one cooling channel 130 to be located at a distance 350 within a range of about 127 micrometers (0.005 inches) to about 762 micrometers (0.030 inches) from surface 322 of cooling member 120 of component 100. Alternatively, three-dimensional printing allows the at least one cooling channel 130 to be located at a distance 350 of at least less than about 508 micrometers (0.020 inches) from the surface 322 of cooling member 120 of component 100 (see FIG. 5). Distance 350 between cooling channel 130 and surface 322 of component 100 may be up to at least less than or as little as about 127 micrometers (0.005 inches). Distance 350 between cooling channel 130 and surface 322 of component 100 may be constant throughout cooling channel 130 length in component 100. In an alternative embodiment, distance 350 may be varied throughout length of cooling channel 130 in component 100 (see FIG. 4). Distance 350 may be from about 127 micrometers (0.005 inches) to about 1524 micrometers (0.060 inches), or alternatively about 254 micrometers (0.010 inches) to about 1270 micrometers, or alternatively about 254 micrometers (0.010 inches) to about 1016 micrometers, or alternatively about 254 micrometers (0.010 inches) to about 508 micrometers (0.020 inches), or alternatively less than about 508 micrometers (0.020 inches), or alternatively about 254 micrometers (0.010 inches) or alternatively about 127 micrometers (0.005 inches). In comparison, typical casting methods used to form a component with cooling channels will have cooling channels located at about 2540 micrometers (0.100 inches) from surface.

Using three-dimensional printing to form at least one cooling channel 130 in cooling member 120 or at least one portion 110 reduces manufacturing steps and saves time and resources because cooling channels do not need to be drilled into the surface of component. Printing cooling member 120 or at least one portion 110 with cooling channels 130 formed therein also reduces manufacturing steps and time and resources because open cooling channels do not need to be closed using insert plates. The three-dimensional printing processes also allows the geometry (length, width, height, and depth) of the cooling channels 130 and at least one fluid pathway 360 therein to be varied along the length of cooling channel 130 within cooling member 120. For example, cooling channel 130 may constrict or narrow in some areas or widen in other areas to match the cooling or heating local demands of component 100. Cooling channel 130 dimensions may be changed as necessary and the dimensions do not need to be constant from one end to another. In one embodiment, cooling channel 130 may be a semi-circle having a width and depth of about 254 micrometers (0.010 inches) to about 2540 micrometers (0.100 inches) or alternatively about 762 micrometers (0.030 inches) to about 1524 micrometers (0.060 inches).

In one embodiment, prior to joining cooling member 120 to at least one portion 110, an optional step of hot isostatic pressing (HIP) and/or solution heat-treating is performed to strengthen the printed cooling member 120 or at least one portion 110. During HIP operation, internal defects such as porosity and micro fissures are closed or healed due to the temperature and applied pressure. During solution heat treatment, all deleterious precipitates are put into solution in the material matrix thereby providing the best properties. These heat treatments change the grain structure through formation of new grains ultimately strengthening the printed cooling member 120.

As shown in FIG. 4, surface 322 may be coated with a protective coating 340. Protective coating 340 may include any number of layers, such as, but not limited to a bond coating 342 and thermal barrier coating 344 applied to bond coating 342. Protective coating 340 may be applied prior to joining cooling member 120 to at least one portion 110. Protective coating 340 may be applied after cooling member 120 is jointed to at least one portion 110 by welding, brazing or other suitable mechanical joining means.

Transporting a fluid through at least one fluid pathway 360 defined by at least one cooling channel 130 within the component alters, cools, or heats surface 322 of component 100. The changes in geometry may be designed so as to maximize or minimize the alteration of temperature at any particular location along the length of at least one cooling channel 130 in component 100. The changes in geometry may enable highly specific manipulation of the thermal characteristics of surface 322 by at least one cooling channel 130. The geometry changes may enable the modification of thermal management properties of a component design with minimized cost and time compared to methods and articles that do not include one or more of the features disclosed herein.

Referring to FIG. 6, in one embodiment, at least one cooling channel 130 may include at least one feature to disrupt laminar flow of a fluid through the at least one fluid pathway 360. The at least one feature to disrupt laminar flow may include turbulators 406, which mix the fluid in the at least one fluid pathway 360 from the middle to the sides and from the sides to the middle, making the at least one fluid pathway 360 effectively longer. Turbulators 406 may also increase the surface area of at least one cooling channel 130, which increases heat transfer from or to the fluid flowing through the at least one fluid pathway 360 to or from the substrate 322. Suitable examples of turbulators 406 include, but are not limited to, fin 410 and bumps 412. Turbulators 406 may be of any suitable shape or size, and may be included on the at least one inner surface of cooling channel 130 in any suitable arrangement or spacing to achieve the desired effect. Turbulators 406 may be formed within at least one cooling channel 130 using a three-dimensional printing process, resulting in a single homogeneous piece.

Also provided is a method of thermal management. The method includes forming at least one portion 110 of component 100 (see FIG. 1). The method includes printing a cooling member 120 (see FIG. 1) or first segment 260 and at least one second segment 280 and building cooling member 120 of component 100 (see FIGS. 2 and 3). The method includes attaching the at least one portion 110 to cooling member 120 of component 100 (see FIG. 1). The method includes transporting a fluid through the at least one fluid pathway 360 defined by the at least one cooling channel 130 within component 100 to cool component 100 (see FIGS. 4 and 6).

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

## Claims

1. A method of manufacturing a turbine component (100) comprising:
printing at least one cooling member portion (120) of the component, the cooling member portion (120) including at least one cooling feature (122) that comprises at least one cooling cavity (490) and at least one cooling channel (130), the at least one cooling cavity running from a first end (222) to a second end (224) of the cooling member, and the at least one cooling channel (130) adjacent to and extending along a length of a surface (322) of the cooling member and at a distance of about 127 (0.005 inches) to about 762 micrometers (0.030 inches) from the surface (322) of the cooling member, the at least one cooling channel (130) interconnecting through a first end opening (150) and a second end opening (160) with one or more of the at least one cooling cavity (490) and the surface (322) of the cooling member to provide a fluid pathway therebetween; and separately forming at least one or more additional portions of the component, at least one of the one or more additional portions adapted for attachment to the cooling member; and
attaching at least one of the one or more additional portions (110) of the component to the cooling member portion (120) of the component (100);
wherein the step of printing uses a three-dimensional printing process.

2. The method of claim 1, wherein the at least one of the one or more additional portions of the component further includes at least one cooling cavity that aligns with the at least one cooling cavity of the cooling member (120) portion upon attachment thereto.

3. The method of claim 1 or 2, wherein the step of forming at least one or more additional portions of the component includes casting or three-dimensional printing.

4. The method of any preceding claim, wherein the step of attaching includes welding, brazing transient liquid phase (TLP) bonding, diffusion bonding, mechanical attachment, or combinations thereof.

5. The method of any preceding claim, wherein the at least one of the one or more additional portions (110) is selected from a first material and the cooling member (120) is selected from a second material wherein the first material is the same as or is different from the second material.

6. The method of any preceding claim, wherein the first material is selected from nickel, iron, cobalt, chromium, molybdenum, aluminum, titanium, stainless steel, nickel based superalloys, cobalt super alloys or combinations thereof.

7. The method of any preceding claim, wherein the second material is selected from nickel, iron, cobalt, chromium, molybdenum, aluminum, titanium, stainless steel, nickel based superalloys, cobalt super alloys or combinations thereof.

8. The method of any preceding claim, wherein the at least one cooling channel (130) has a varying geometry throughout the cooling member (120).

9. The method of any preceding claim, further comprising applying at least one protective coating after the step of attaching.

## Patentansprüche

1. Verfahren zum Herstellen einer Gasturbinenkomponente (100), umfassend:
Drucken mindestens eines Kühlelementabschnitts (120) der Komponente, wobei der Kühlelementabschnitt (120) mindestens ein Kühlmerkmal (122) einschließt, das mindestens einen Kühlhohlraum (490) und mindestens einen Kühlkanal (130) umfasst, wobei der mindestens eine Kühlhohlraum von einem ersten Ende (222) zu einem zweiten Ende (224) des Kühlelements verläuft und der mindestens eine Kühlkanal (130) benachbart zu und sich entlang einer Länge einer Oberfläche (322) des Kühlelements und in einem Abstand von etwa 127 (0,005 Zoll) bis etwa 762 Mikrometer (0,030 Zoll) von der Oberfläche (322) des Kühlelements erstreckt, wobei der mindestens eine Kühlkanal (130) durch eine erste Endöffnung (150) und eine zweite Endöffnung (160) mit einem oder mehreren des mindestens einen Kühlhohlraums (490) und der Oberfläche (322) des Kühlelements verbunden ist, um einen Fluidweg dazwischen bereitzustellen; und separates Bilden mindestens eines oder mehrerer zusätzlicher Abschnitte der Komponente, wobei mindestens einer des einen oder der mehreren zusätzlichen Abschnitte zur Befestigung an dem Kühlelement ausgelegt ist; und
Befestigen mindestens eines des einen oder der mehreren zusätzlichen Abschnitte (110) der Komponente an dem Kühlelementabschnitt (120) der Komponente (100);
wobei der Schritt des Druckens einen dreidimensionalen Druckprozess verwendet.

2. Verfahren nach Anspruch 1, wobei der mindestens eine des einen oder der mehreren zusätzlichen Abschnitte der Komponente ferner mindestens einen Kühlhohlraum aufweist, der sich bei Befestigung daran mit dem mindestens einen Kühlhohlraum des Kühlelementabschnitts (120) ausrichtet.

3. Verfahren nach Anspruch 1 oder 2, wobei der Schritt des Bildens mindestens eines oder mehrerer zusätzlicher Abschnitte der Komponente ein Gießen oder dreidimensionales Drucken umfasst.

4. Verfahren nach einem der vorstehenden Ansprüche, wobei der Schritt des Befestigens Schweißen, Löten, Verbinden mit transienter flüssiger Phase (TLP), Diffusionsverbinden, mechanisches Befestigen oder Kombinationen davon umfasst.

5. Verfahren nach einem der vorstehenden Ansprüche, wobei der mindestens eine des einen oder der mehreren zusätzlichen Abschnitte (110) aus einem ersten Material ausgewählt ist und das Kühlelement (120) aus einem zweiten Material ausgewählt ist, wobei das erste Material das gleiche wie das zweite Material ist oder davon verschieden ist.

6. Verfahren nach einem der vorstehenden Ansprüche, wobei das erste Material ausgewählt ist aus Nickel, Eisen, Kobalt, Chrom, Molybdän, Aluminium, Titan, Edelstahl, Superlegierungen auf Nickelbasis, Kobalt-Superlegierungen oder Kombinationen davon.

7. Verfahren nach einem der vorstehenden Ansprüche, wobei das zweite Material ausgewählt ist aus Nickel, Eisen, Kobalt, Chrom, Molybdän, Aluminium, Titan, Edelstahl, Superlegierungen auf Nickelbasis, Kobalt-Superlegierungen oder Kombinationen davon.

8. Verfahren nach einem der vorstehenden Ansprüche, wobei der mindestens eine Kühlkanal (130) über das gesamte Kühlelement (120) eine variierende Geometrie aufweist.

9. Verfahren nach einem der vorstehenden Ansprüche, ferner umfassend das Aufbringen mindestens einer Schutzbeschichtung nach dem Schritt des Befestigens.

## Revendications

1. Procédé de fabrication d'un composant de turbine (100) comprenant :
l'impression d'au moins une partie d'élément de refroidissement (120) du composant, la partie d'élément de refroidissement (120) incluant au moins une caractéristique de refroidissement (122) qui comprend au moins une cavité de refroidissement (490) et au moins un canal de refroidissement (130), l'au moins une cavité de refroidissement s'étendant depuis une première extrémité (222) à une seconde extrémité (224) de l'élément de refroidissement, et l'au moins un canal de refroidissement (130) adjacent à et s'étendant le long d'une longueur d'une surface (322) de l'élément de refroidissement et à une distance d'environ 127 (0,005 pouce) à environ 762 micromètres (0,030 pouce) de la surface (322) de l'élément de refroidissement, l'au moins un canal de refroidissement (130) interconnectant à travers une première ouverture d'extrémité (150) et une seconde ouverture extrémité (160) avec un ou plusieurs de l'au moins une cavité de refroidissement (490) et de la surface (322) de l'élément de refroidissement pour fournir un passage de fluide entre eux ; et formant séparément au moins une ou plusieurs parties supplémentaires du composant, au moins l'une des une ou plusieurs parties supplémentaires étant adaptée pour une fixation sur l'élément de refroidissement ; et
la fixation d'au moins l'une des une ou plusieurs parties supplémentaires (110) du composant à la partie d'élément de refroidissement (120) du composant (100) ;
dans lequel l'étape d'impression utilise un procédé d'impression en trois dimensions.

2. Procédé selon la revendication 1, dans lequel l'au moins une des une ou plusieurs parties supplémentaires du composant inclut en outre au moins une cavité de refroidissement qui s'aligne avec l'au moins une cavité de refroidissement de la partie d'élément de refroidissement (120) lors de sa fixation à celle-ci.

3. Procédé selon la revendication 1 ou 2, dans lequel l'étape de formation d'au moins une ou plusieurs parties supplémentaires du composant inclut une coulée ou une impression en trois dimensions.

4. Procédé selon l'une quelconque des revendications précédentes, dans lequel l'étape de fixation inclut le soudage, le procédé de brasage en phase liquide transitoire (TLP), la liaison par diffusion, la fixation mécanique ou des combinaisons de ceux-ci.

5. Procédé selon l'une quelconque des revendications précédentes, dans lequel l'au moins une des une ou plusieurs parties supplémentaires (110) est choisie parmi un premier matériau et l'élément de refroidissement (120) est choisi parmi un second matériau dans lequel le premier matériau est le même ou est différent du second matériau.

6. Procédé selon l'une quelconque des revendications précédentes, dans lequel le premier matériau est choisi parmi le nickel, le fer, le cobalt, le chrome, le molybdène, l'aluminium, le titane, l'acier inoxydable, les superalliages à base de nickel, les superalliages de cobalt ou des combinaisons de ceux-ci.

7. Procédé selon l'une quelconque des revendications précédentes, dans lequel le second matériau est choisi parmi le nickel, le fer, le cobalt, le chrome, le molybdène, l'aluminium, le titane, l'acier inoxydable, les superalliages à base de nickel, les superalliages de cobalt ou des combinaisons de ceux-ci.

8. Procédé selon l'une quelconque des revendications précédentes, dans lequel l'au moins un canal de refroidissement (130) possède une géométrie variable dans tout l'élément de refroidissement (120).

9. Procédé selon l'une quelconque des revendications précédentes, comprenant en outre l'application d'au moins un revêtement protecteur après l'étape de fixation.
